# EUROPEAN PATENT APPLICATION

(11) **EP 0 927 926 A2**
(43) Date of publication of application: **07.07.1999**
(21) Application number: 98310211.2
(22) Date of filing: 11.12.1998
(51) Int. Cl.: G06F 3/033

(54) **System and method for providing a user definable indicator setting for graphical user interfaces**

(30) Priority: 29.12.1997 US 999208
(71) Applicant: LUCENT TECHNOLOGIES INC., Murray Hill, New Jersey 07974-0636 (US)
(72) Inventor: Herpers, Martine Madelaine, 91056 Erlangen (DE)
(74) Representative: Watts, Christopher Malcolm Kelway, Dr.

(57) **Abstract**

The system enables a user wishing to perform a particular program task, using a computer program equipped with a menu-based graphical user interface, to place visual indicators on all user interface menu commands necessary to accomplish that particular task, such that when performing the same task in the future, the user is automatically guided by the visual indicators in the selection of appropriate menu commands. The system also enables automatic placement of visual indicators on all menu commands that should be selected in order to reach a particular menu command, when the user selects the particular menu command. Finally, the system of the present invention is also capable of displaying to the user the order in which the menu command having visual indicators should be selected to perform the particular task.

## Description

### Field of the Invention

The present invention relates to a system and method for assisting users in using graphical user interfaces having user-accessible menus. More particularly, the invention is directed to a system and method for enabling a user wishing to perform a particular program task to place indicators on all user interface menu commands necessary to accomplish that particular task, such that when performing the same task in the future, the user is automatically guided by the indicators in the selection of appropriate menu commands.

### Description of the Related Art

In recent years, computer software programs having graphical user interfaces have become the industry standard. A graphical user interface enables the user to instruct the software program to perform one or more tasks by selecting appropriate menu commands from one or more menus displayed to the user. Typically, each menu contains a particular set of menu commands for performing related tasks. For example, in a word processing program, a "Format" menu may contain menu commands that when selected by the user, enable the user to change the formatting of the lines, paragraphs and pages in a word processing document.

As computer programs have become more complex and feature-laden, the number and variety of tasks that may be performed using the programs have greatly increased at the expense of a vast increase in the complexity of the programs' graphical user interfaces and menus. To perform even relatively simple tasks using modern computer programs a user must often navigate through a series of menus in which, when a particular menu command is selected in each menu, the user is presented with another subsequent menu from which the next menu command selection must be made until a final desired menu command for actually performing the intended task is eventually located and selected. While the functionality of these computer programs is greatly increased by presenting the user with a very large number of different menu commands, the presentation of a series of multiple subsequent menus is problematic because the user must often navigate through many menus before finally locating the intended or sought menu command.

This process may be especially frustrating for inexperienced and/or occasional users of computer programs who are not particularly familiar with a computer program's menu structure and who are attempting to locate a particular function or command. The problem is further exacerbated when the user does not remember the particular menu command that is needed to perform the desired task. In such a case, the user may have to spend long periods of time trying to locate the particular menu command by searching through multiple menus. Moreover, many casual users do not need the unusually broad range of functionality provided by modern computer programs and regularly perform only a small group of tasks. Thus, the increased available functionality actually causes unnecessary confusion among and complicates the use of computer programs by casual and/or inexperienced users.

Several approaches have been developed to alleviate this problem. The first provides an interactive help system to assist and guide the user in performing various tasks while using the computer program. This approach has several disadvantages. First, in order to gain assistance in performing a particular task, the user must initiate interaction with the help system, locate a topic relevant to the task to be performed and then locate instructions for performing the task. This process may be as difficult and as frustrating as locating the desired menu command to begin with. Second, a typical help system offers much more information than the user generally needs to perform the desired task, forcing the user to read through unnecessary details. Third, the user must remember the help system's instructions for performing the task after leaving the help system. Finally, when the user uses the computer program again at some future date to perform the same task, he or she may have already forgotten the instructions previously provided by the help system and thus need to once again utilize the help system.

Another approach involves the provision in a computer program of a "macro" definition feature. Using this feature, a user can automate desired tasks by recording a macro -- i.e. a set of programmed commands that are executed in- a predefined sequence when the macro is invoked by the user. Thus, after defining a macro for a particular task, the user can readily perform the task in the future by merely invoking the macro. While this approach is clearly efficient, it has several serious drawbacks. First, recording a macro is itself often a very complex task that is difficult for novices or casual users. Second, many computer programs are not furnished with a macro definition feature. Third, a recorded macro does not enable the user to see which menu commands are being performed nor to change any of the performed menu commands without re-recording the macro. Thus, if the user desires to perform a task very similar to one automated by the macro, then an entirely new macro must be recorded even if the difference between the tasks lies in only one step or command. Furthermore, a macro does not aid the user in learning how to perform the particular task for which the macro is recorded. Because macros are stored only on the data processing system on which they were defined, when the user uses a different computer the macro cannot be utilized and the user must rely on his or her memory to perform the desired task.

### Summary of the Invention

The disadvantages and limitations discussed above are overcome by the present invention. The system of the invention enables a user wishing to perform a particular program task, using a computer program equipped with a menu-based graphical user interface, to place visual markers or indicators on all user interface menu commands necessary to accomplish that particular task so that, when performing the same task in the future, the user is automatically guided by the visual indicators in the selection of the appropriate menu commands. The system of the present invention also enables automated placement of such visual markers or indicators on all menu commands that must be selected in order to reach a particular command as the user manually follows the necessary path to the particular command. Finally, the system of the present invention is also operable for displaying to the user the order in which the visually marked menu commands must be selected in order to perform the particular task.

In accordance with the invention, a computer system is provided with a control unit for controlling the system's operation, a memory for storing a computer program and data files, a display device for displaying a graphical user interface of the computer program to a user, and an input device for accepting input from the user.

The operation of the computer system is controlled by or through its control unit in accordance with the computer program that is stored in the memory. The user interacts with and issues commands to the computer program via the input device and the graphical user interface. To perform a particular task using the computer program, the user typically navigates through multiple groups or series of menus that are part of the graphical user interface and selects appropriate predetermined menu items or commands from the various menus. In accordance with a first embodiment of the invention, the graphical user interface is provided with a menu command displayed to the user and that, when selected by the user, thereafter enables the user to associate visual markers or indicators with particular menu commands that must be selected to perform a particular task. The visual indicators are then stored in the memory along with the associated menu commands and thus become a part of the displayed graphical user interface so that during future use of the computer program, the user may simply follow the displayed visual markers or indicators to correctly select menu commands necessary for performing the particular task. In this manner the user is assisted in navigating through the menus of the graphical user interface in the most expedient manner possible. Should the user wish to place markers or indicators for more than one task, then preferably each set of visual indicators for a different task is provided with a distinctive visual appearance. For example, one set of visual indicators may set the color of the associated menu commands to red, while another set of visual indicators may cause the associated menu commands to be underscored or italicized.

In another embodiment of the invention, the graphical user interface is provided with a menu command that is displayed to the user and that, when selected by the user, thereafter causes the control unit to automatically associate markers or visual indicators with each of the menu commands that must be selected to perform a particular task, the automatic association being carried out after the user has selected the last in a sequence of commands necessary to perform the task. In accordance with the invention, the control unit may optionally mark each of the visually marked menu commands with a number or other sequential indicator to notify the user during future use of the computer program of the exact sequence in which the menu commands must be selected to perform the particular task. The visual and sequential indicators are then stored in the memory along with the associated menu commands and thus become a part of the displayed graphical user interface so that during future use of the computer program the user may follow the displayed visual indicators in the required sequence to select the menu commands necessary for again performing the particular task. In this manner the user is assisted in navigating through the menus of the graphical user interface in the most expedient manner possible, and the sequence is reinforced in the user's mind. As above, should the user wish to include indicators for more than one task, then preferably each set of visual indicators for a different task is provided with a distinctive visual appearance.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims.

### Brief Description of the Drawings

In the drawings, wherein like reference characters denote corresponding or similar elements throughout the various figures:
FIG. 1 is a schematic block diagram of a data processing system or computer for providing user definable indicator settings for menu commands of a graphical user interface in accordance with the present invention;
FIG. 2 is a logic flow chart representative of the functional operation of the system of FIG. 1 in accordance with a first embodiment of the present invention;
FIG. 3 is a logic flow chart representative of the functional operation of the system of FIG. 1 in accordance with a second embodiment of the present invention; and
FIG. 4 is a structured diagram representative of exemplary visual indicators that may be used in accordance with the present invention.

### Detailed Description of the Presently Preferred EMBODIMENTS

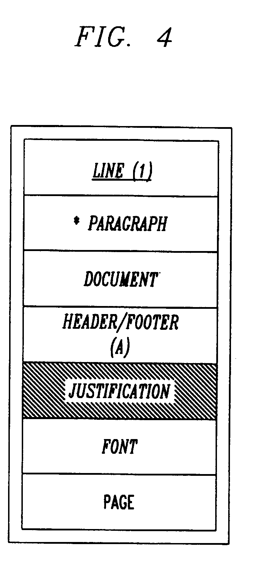

Before describing the system of the present invention in greater detail, it will be helpful to define the terms used herein to identify and denote the various basic components of and used with the system. A "computer program" is any application software program having a graphical user interface and designed for execution on a computer system. Examples of such computer programs include, but are not limited to, word processors, spreadsheets, databases, communication programs, and computer aided design programs. A "graphical user interface" is a visual interface of the computer program that contains a variety of menus each formed of or having menu command sets, that is displayed to the user and that enables the user to instruct the computer program to perform one or more tasks by selecting appropriate menu commands from the displayed menus by selectively activating a pointing input device such as a mouse. A "visual indicator" is a mark displayed at or adjacent to a menu command or a visual modification of a displayed menu command to indicate to the user that the menu command is one of the commands that should be selected in order to perform a particular task. Various examples of visual indicators are described below in conjunction with FIG. 4.

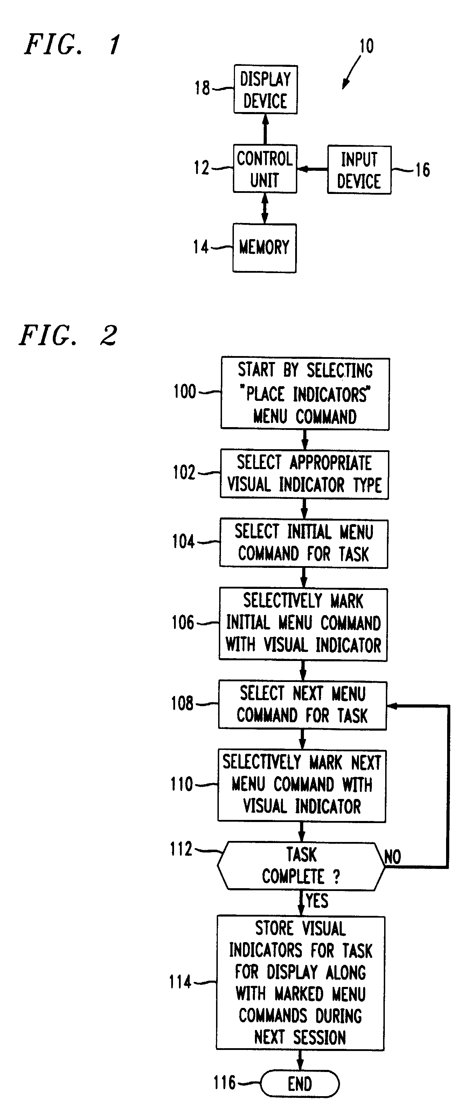

Referring now to the drawings, and initially to FIG. 1 thereof, a computer system 10 is preferably a personal computer, workstation platform, or terminal of a network computer system. The system 10 is formed of or includes a control unit 12, such as a microprocessor, for controlling the system's operation, a memory 12 that includes short term memory such as random access memory (RAM) and storage memory such as a hard disk drive, a display device 18 such as a display monitor for displaying the graphical user interface to the user, and an input device 16 such as a touch-screen, keyboard, and/or a graphical user interface pointing device such as a mouse or trackball for accepting input from a user.

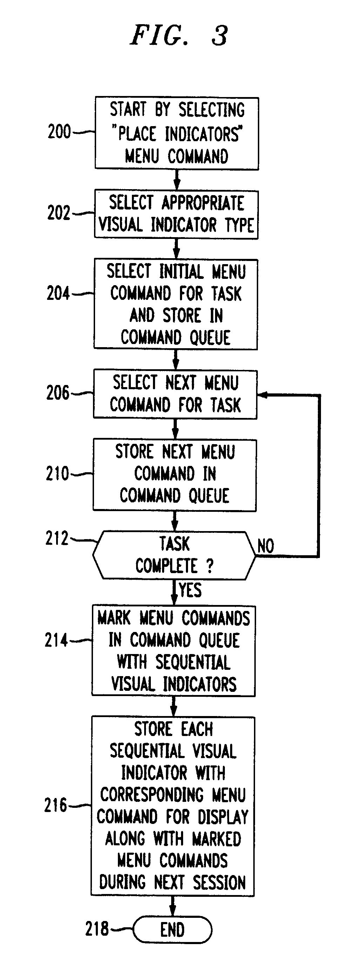

The operation of the system 10 of the present invention is generally controlled by a computer program stored in the memory 14 and executed by the control unit 12. This computer program typically consists of multiple integrated program modules, with each module bearing responsibility for controlling one or more functions of the computer system 10 and/or the program executing thereon. For example, one program module may respond to a particular set of menu commands that are displayed to the user, while another program module may control the display of the graphical user interface to the user. In effect, each program module is a control program dedicated to a specific function or set of functions of the computer system 10. The preferred embodiments of the control program module of the present invention are described below in connection with FIGS. 2 and 3.

Referring now to FIG. 2, a logic flow chart or diagram representing a first embodiment of a control program module for the computer system 10 of FIG. 1 in accordance with the present invention is described. The execution of this control program module begins at step 100 when a user wishing to perform a particular task using the computer program selects from the graphical user interface a menu command indicative of the user's desire to mark menu commands for a particular task with visual indicators. For example, the menu command may be displayed to the user as "Place Indicators" or equivalent.

At step 102, the user is prompted by the control unit 12 to select an appropriate visual indicator type from a predetermined group of visual indicator types stored in memory 14. The particular visual indicator type selected may merely be a matter of user choice -- i.e. a given user may mentally associate a particular visual indicator type with performance of a particular task. For example, to identify a task that changes the color of all text in a word processing document, the user may select a visual indicator type that causes the marked menu commands to be displayed in bold script and in a red-colored font. Alternatively, an appropriate visual indicator type may be automatically selected by the control unit 12 from the available visual indicator types such that each visual indicator type is associated with a unique task.

At step 104, the user selects an initial menu command for performing the desired task. For example, the user may use the input device 16, such as a mouse, to point to and click on a particular menu command displayed as part of the graphical user interface on the display device 18. At step 106, the user selectively marks the initial menu command with the visual indicator of the type selected at step 102. The particular marking function using the input device 16 may be implemented in one or more ways as a matter of design choice. For example, the user may mark a menu command by clicking a particular mouse button while pointing a mouse pointer to the menu command or by executing one or more predetermined keystrokes on a keyboard while the menu command to be marked is selected.

At step 108, the user selects the next menu command necessary for performing the desired task and at step 110 the user selectively marks that next menu command with the visual indicator. At test 112, the control unit 10 determines whether the desired task is complete. Preferably, the task is complete when a menu command which does not itself invoke a further menu is selected. Optionally, the control unit 12 may prompt the user to indicate whether the task is complete. If the task is not complete, then the control unit 12 returns to step 108 where the user may select a next menu command. Otherwise, the control unit 12 proceeds to step 114 where the control unit 12 stores the visual indicators along with the marked menu commands in memory 14 for display to the user during future use of the computer program. The operation of the control program module ends at step 116 when the desired task is performed by the control unit 12. Thus, when the user again uses the computer program operatively executing on the system 10, the user is advantageously guided in selecting the required series of menu commands for to perform the desired task by the displayed visual indicators.

FIG. 3 depicts a logic flow chart representing a modified second embodiment of a control program module for the computer system 10 of FIG. 1 in accordance with the present invention. The execution of the FIG. 3 control program module begins at step 200 when a user wishing to perform a particular task using the computer program selects a menu command from the graphical user interface indicative of the user's desire to automatically mark menu commands for a particular task with visual indicators. For example, the menu command may be displayed and identified to the user as "Automatically Place Indicators" or equivalent.

At step 202, the user is prompted by the control unit 12 to select an appropriate sequential visual indicator type from a predetermined group of sequential visual indicator types stored in memory 14 as described above in conjunction with step 102 of FIG. 2. Alternatively, an appropriate sequential visual indicator type may be automatically selected by the control unit 12 from the available visual indicator types such that each visual indicator type is associated with a unique task.

At step 204, the user selects an initial menu command for performing the desired task. For example, the user may use the input device 16, such as a mouse, to point to and click on a particular menu command displayed on the display device 18 as part of the graphical user interface. The control unit 12 also stores the initial menu command in a sequential command queue in memory 14. At step 206, the user selects the next menu command necessary for performing the desired task and at step 208 the control unit 12 sequentially stores the next menu command in the command queue. At test 210, the control unit 10 determines whether the desired task is complete. Preferably, the task is complete when a menu command which does not invoke a further menu is selected. Optionally, the control unit 12 may prompt the user to indicate whether the task is complete. If the task is not complete, then the control unit 12 returns to step 206 where the user may select the next menu command. Otherwise, the control unit 12 proceeds to step 212, where it marks the menu commands stored in the command queue with sequential visual indicators representative of the order in which the menu commands should be selected to perform the task. This arrangement is particularly advantageous when the sequence of menu commands necessary for performing the desired task is not intuitive or apparent, as for example where a menu is a window dialog box with five possible menu commands or choices therein that may be selected in any sequence.

At step 214, the control unit 12 stores the sequential visual indicators together or in association with the marked menu commands in memory 14 for display to the user during future use of the computer program. The operation of the control program module ends at step 216 when the desired task is performed by the control unit 12. Thus, when the user again uses the computer program operatively executing on the system 10, the user is advantageously guided to sequentially select the appropriate menu commands for the desired task by the displayed sequential visual indicators.

Referring now to FIG. 4, examples of various visual indicators are shown in conjunction with exemplary menu commands and include, without limitation, underscoring of a menu command, displaying of an asterisk or other symbol adjacent to a menu command, displaying of a menu command in bold text, highlighting a menu command in a predetermined color, displaying a menu command using capitalized letters, and displaying a menu command in a different font from other menu commands in the menu. Exemplary sequential visual indicators are also shown as a number or (in FIG. 4) a letter displayed with or adjacent to a menu command to indicate the order of the menu command in a sequence of menu commands that should be selected to perform the desired task. As should be apparent, the visual indicator examples of FIG. 4 are not intended to be exhaustive but, rather, to merely illustrate by way of example the wide variety of visual markers and techniques that may be employed to identify or highlight particular menu commands in accordance with the invention. It should be understood by those skilled in the art that the present invention contemplates any visual marking technique that is displayable to a user.

## Claims

1. A system for assisting a user in performing a desired task using a computer program operatively executing on a data processing system having a memory and a display, the computer program having a graphical user interface comprising a plurality of menu commands displayed on the display and selectable for performing a plurality of tasks, particular ones of the plural menu commands being selectable by the user in a predefined sequence to cause the computer program to operatively execute a predetermined one of the plural tasks, said system comprising:
means for defining a visual indicator for visually identifying to the user the particular menu commands selectable to perform the predetermined task;
means for selecting each one of the particular menu commands of the predefined sequence of menu commands using the input device;
means for marking for display on the display said selected each one particular menu command with said visual indicator so that said marked selected each one particular menu command is identified on the display by said visual indicator;
means for storing in the memory said defined visual indicator for each said selected particular menu command of the predefined sequence; and
means for displaying on the display, after said means for storing stores the defined visual indicators and the selected particular menu commands, the defined visual indicators in conjunction with each of the selected particular menu commands when said each particular menu command is displayed on the display so as to thereby identify said each particular menu command as a part of the predefined sequence for causing the computer program to operatively execute the predetermined task.

2. The system of claim 2, wherein said means for marking further comprises means for specifying a sequential indicator for each of said selected particular menu commands representative of its relative sequential position in the predefined sequence of menu commands, and wherein said means for storing further comprises means for storing in the memory said sequential indicator in conjunction with each of said selected particular menu commands.

3. The system of claim 1, wherein said visual indicator comprises one of underscoring a particular menu command, displaying a predefined symbol proximate a particular menu command, displaying a particular menu command in bold text, highlighting a particular menu command in a predetermined color, displaying a particular menu command using capitalized letters, and displaying a particular menu command in a font different from others of the plural menu commands.

4. The system of claim 1, wherein said means for defining further comprises means for defining a plurality of unique visual indicators, said system further comprising means for selecting a particular unique visual indicator from said plurality of unique visual indicators to mark menu commands for a particular predetermined task.

5. The system of claim 1, wherein said means for marking further comprises means for automated marking by the data processing system of each selected particular menu command in the predetermined sequence of menu commands.

6. The system of claim 2, wherein said sequential indicator comprises one of a number and a letter.

7. A method of assisting a user in performing a desired task using a computer program operatively executing on a data processing system having a memory and a display, the computer program having a graphical user interface comprising a plurality of menu commands displayed on the display and selectable for performing a plurality of tasks, particular ones of the plural menu commands being selectable by the user in a predefined sequence to cause the computer program to operatively execute a predetermined one of the plural tasks, said method comprising the steps of:
(a) defining a visual indicator for visually identifying to the user the particular menu commands selectable to perform the predetermined task;
(b) selecting one of the particular menu commands of the predefined sequence of menu commands using the input device;
(c) marking for display on the display said selected one particular menu command with said visual indicator so that said marked selected one particular menu command is identified on the display by said visual indicator;
(d) repeating said steps (b) and (c) for each of the particular menu commands of the predefined sequence;
(e) storing in the memory, after said selecting of each of the plural menu commands of the predefined sequence, said defined visual indicator and said selected particular menu command of the predefined sequence; and
(f) displaying on the display, after said storing of the defined visual indicators and the selected particular menu commands, the defined visual indicators in conjunction with each of the selected particular menu commands when said each particular menu command is displayed on the display so as to thereby identify said each particular menu command as a part of the predefined sequence for causing the computer program to operatively execute the predetermined task.

8. The method of claim 7, wherein said step (c) further comprises:
(g) specifying a sequential indicator for each of said selected particular menu commands representative of its relative sequential position in the predefined sequence of menu commands, and wherein said step (e) further comprises (h) storing in the memory said sequential indicator in conjunction with each of said selected particular menu commands.

9. The method of claim 7, wherein said visual indicator comprises one of underscoring a particular menu command, displaying a predefined symbol proximate a particular menu command, displaying a particular menu command in bold text, highlighting a particular menu command in a predetermined color, displaying a particular menu command using capitalized letters, and displaying a particular menu command in afont different from others of the plural menu commands.

10. The method of claim 7, wherein said step (a) further comprises (i) defining a plurality of unique visual indicators, said method further comprising (j) selecting a particular unique visual indicator from said plurality of unique visual indicators to mark menu commands for a particular predetermined task.

11. The method of claim 7, wherein said step (c) further comprises (k) automated marking by the data processing system of each selected particular menu command in the predetermined sequence of menu commands.

12. The method of claim 8, wherein said sequential indicator comprises one of a number and a letter.

13. The method of claim 7, wherein said step (e) is performed for each of the selected particular menu commands sequentially after said each selected particular menu command is selected.

14. The method of claim 7, wherein said step (e) is performed once for all of said selected particular menu commands after all of the selected particular menu commands have been selected.
